Europäisches Patentamt

European Patent Office

Office européen des brevets

(11) Numéro de publication : **0 344 051 B1**

# (12) FASCICULE DE BREVET EUROPEEN

(45) Date de publication du fascicule du brevet :
08.07.92 Bulletin 92/28

(51) Int. Cl.⁵ : **G21C 19/36,** G21C 19/06

(21) Numéro de dépôt : **89401391.1**

(22) Date de dépôt : **22.05.89**

(54) Cellule de réception et de démantèlement d'assemblage combustible nucléaire.

(30) Priorité : **24.05.88 FR 8806860**

(43) Date de publication de la demande :
**29.11.89 Bulletin 89/48**

(45) Mention de la délivrance du brevet :
**08.07.92 Bulletin 92/28**

(84) Etats contractants désignés :
**BE CH DE ES LI SE**

(56) Documents cités :
**EP-A- 0 068 136
EP-A- 0 209 262
EP-A- 0 218 494
FR-A- 2 460 027
FR-A- 2 600 202**

(73) Titulaire : **FRAMATOME
Tour Fiat 1, Place de la Coupole
F-92400 Courbevoie (FR)**

(72) Inventeur : **Beneck, Jean Albert
5 Rue du Côteau
F-94490 Ormesson (FR)**
Inventeur : **Quayre, Claude
50 Avenue Aristide Briand
F-93360 Neuilly Plaisance (FR)**

(74) Mandataire : **Fort, Jacques et al
CABINET PLASSERAUD 84, rue d'Amsterdam
F-75009 Paris (FR)**

EP 0 344 051 B1

## Description

La présente invention a pour objet une cellule de réception et de démantèlement pour assemblage combustible nucléaire du type comprenant un faisceau de crayons de combustible retenus aux noeuds d'un réseau régulier par un squelette constitué de deux embouts reliés par des tirants et de grilles réparties le long des tirants.

Lorsque de tels assemblages combustibles sont extraits d'un réacteur après irradiation, ils doivent être stockés en piscine jusqu'à désactivation suffisante pour permettre le retraitement des crayons. Il est souhaitable de réduire le plus possible le volume occupé par les éléments de l'assemblage au cours de la désactivation pour augmenter la capacité de stockage de la piscine.

On connaît déjà (EP-A-0 218 494) une installation permettant de fractionner un assemblage combustible en un squelette et des crayons, qui constituent les éléments les plus actifs, et de regrouper les crayons sous forme d'une botte de crayons jointifs répartis suivant un réseau triangulaire. Cette installation comporte une cellule de réception d'assemblage combustible à démanteler permettant successivement d'ôter un embout puis d'extraire les crayons. La cellule comprend une structure verticale de section droite correspondant à celle de l'assemblage à recevoir, portant des mécanismes de retenue des grilles et de l'embout inférieur et un mécanisme de maintien des crayons à leur écartement nominal à peignes déplaçables entre une position où ils sont hors de l'assemblage et une position où les doigts des peignes s'engagent entre les crayons, au dessus de la grille la plus haute restante après enlèvement de l'embout supérieur.

L'invention vise à fournir une cellule de réception et de démantèlement d'assemblage combustible permettant de maintenir ce dernier de façon ferme, d'éviter les risques d'endommagement des crayons lors de la séparation de l'embout supérieur (généralement par sectionnement des tirants constitués par des tubes-guides) et d'éviter le coincement des crayons lors de leur extraction ultérieure.

Dans ce but l'invention propose une cellule de réception et de démantèlement d'assemblage combustible caractérisée en ce que le mécanisme à peignes comporte au moins deux jeux de peignes portés par un châssis solidaire de ladite structure, les peignes de chaque jeu étant guidés sur le châssis et munis de vérins permettant de les rapprocher et de les écarter dans une direction transversale à la direction de rapprochement et d'écartement des peignes de l'autre jeu et en ce que l'un des mécanismes de retenue des grilles comprend des mors articulés sur la structure et reliés à des vérins de commande simultanée permettant de déplacer les mors entre une position où ils libèrent la grille située immédiatement au dessous du mécanisme à peignes et une position prédéterminée par rapport à la structure où les mors enserrent ladite grille de tous les côtés.

Grâce à cette disposition, les extrémités hautes des crayons de combustible restent maintenus de façon précise aux noeuds d'un réseau régulier lorsque l'ensemble constitué de l'embout supérieur de l'assemblage, d'un tronçon des tubes-guides séparé par découpe et éventuellement de la grille haute de l'assemblage est retiré.

Dans le cas où l'assemblage combustible est de section carrée et où les crayons sont retenus aux noeuds d'un réseau carré, le mécanisme à peignes comporte deux jeux de peignes déplaçables orthogonalement et le mécanisme de retenue de la grille la plus haute restant après enlèvement de l'embout supérieur comporte deux jeux de deux mors, l'un des jeux au moins ayant des ergots d'accrochage de la grille s'opposant au déplacement vers le haut de cette dernière.

L'invention sera mieux comprise à la lecture de la description qui suit d'une cellule qui en constitue un mode particulier de réalisation, donné à titre d'exemple non limitatif. La description se réfère aux dessins qui l'accompagnent, dans lesquels :

– la figure 1 est une vue en élévation d'un assemblage combustible susceptible d'être reçu dans une cellule de démantèlement suivant l'invention ;

– la figure 2 est une vue schématique en élévation d'une installation de démantèlement d'assemblage combustible et de compactage des crayons, comportant une cellule de démantèlement suivant un mode de mise en oeuvre de l'invention ;

– la figure 3, similaire à la partie haute de la figure 1, montre un ensemble comprenant l'embout supérieur séparé du reste de l'assemblage ;

– la figure 4 est une vue schématique en élévation de la cellule ;

– les figures 5 et 6 montrent, respectivement en coupe suivant la ligne V-V de la figure 6 et en vue de dessus, le mécanisme à peignes de la cellule de la figure 4 ;

– les figures 7 et 8 sont des schémas montrant la disposition relative des peignes du mécanisme, lorsqu'ils sont insérés dans un assemblage, respectivement en élévation et en vue de dessus ;

– la figure 9 est une vue en élévation et en coupe partielle suivant un plan vertical montrant une fraction du mécanisme de fixation et de centrage de l'embout inférieur dans la cellule de la figure 4 ;

– la figure 10 est une vue de dessus du mécanisme de la figure 9, partiellement en coupe suivant la ligne X-X ;

– les figures 11 et 12, similaires aux figures 9 et 10, montrent une fraction d'un des mécanismes de maintien de grille, respectivement en élévation avec coupe partielle et en vue de dessus ;

– la figure 13 est une vue de face d'une grille montrant les points d'appui du mécanisme de maintien correspondant sur la grille ;

– la figure 14 est un schéma montrant la disposition relative des points d'appui de deux mécanismes de maintien sur deux grilles successives ;

– les figures 15 et 16 montrent, respectivement en vue de dessus et en coupe suivant la ligne XVI-XVI de la figure 15, le mécanisme de maintien et de centrage de la grille la plus haute restant en place dans la cellule.

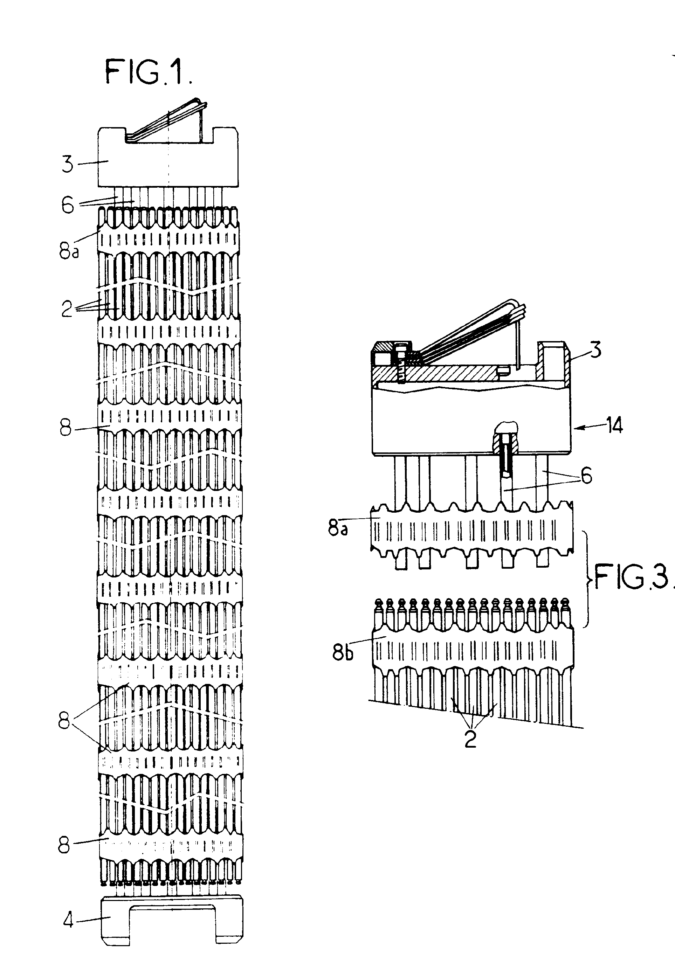

La cellule 12 de démantèlement qui sera décrite à titre d'exemple est destinée à recevoir un assemblage combustible du type montré en figure 1, couramment utilisé à l'heure actuelle dans les réacteurs à eau pressurisé de 900 MWe. Un tel assemblage comprend un squelette et un faisceau de crayons de combustible 2 répartis aux noeuds d'un réseau carré. Le squelette se compose de deux embouts 3 et 4 reliés par des tubes-guides 6 qui remplacent les crayons en certains des noeuds et de grilles 8 réparties le long des tubes-guides. Ces grilles, au nombre de huit dans le mode de réalisation décrit, sont fixées aux tubes-guides et définissent des alvéoles de guidage et de maintien des crayons.

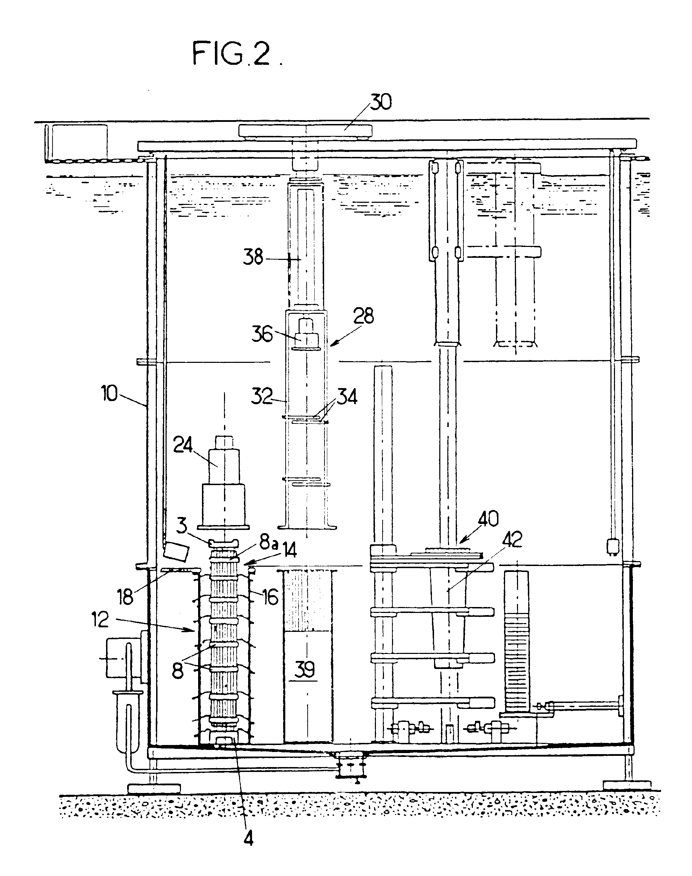

La cellule 12 est notamment utilisable dans une installation de démantèlement ayant la constitution générale montrée en figure 2, décrite dans le document EP-A-0 218 494 auquel on pourra se reporter. Cette installation, placée dans une piscine de réception des assemblages extraits du coeur d'un réacteur, comprend une cage support 10. La cellule 12 de réception et de démantèlement d'assemblage 14 à démanteler repose sur le fond de la structure. La cellule comprend une structure rigide 16 portant un mécanisme à peignes 18 permettant de maintenir les crayons de combustible aux noeuds de leur réseau nominal de répartition, et des moyens de maintien de l'embout inférieur 4 et des grilles.

L'installation comprend également des outils déplaçables horizontalement et verticalement pour leur permettre d'intervenir sur l'assemblage 14 placé dans la cellule de démantèlement.

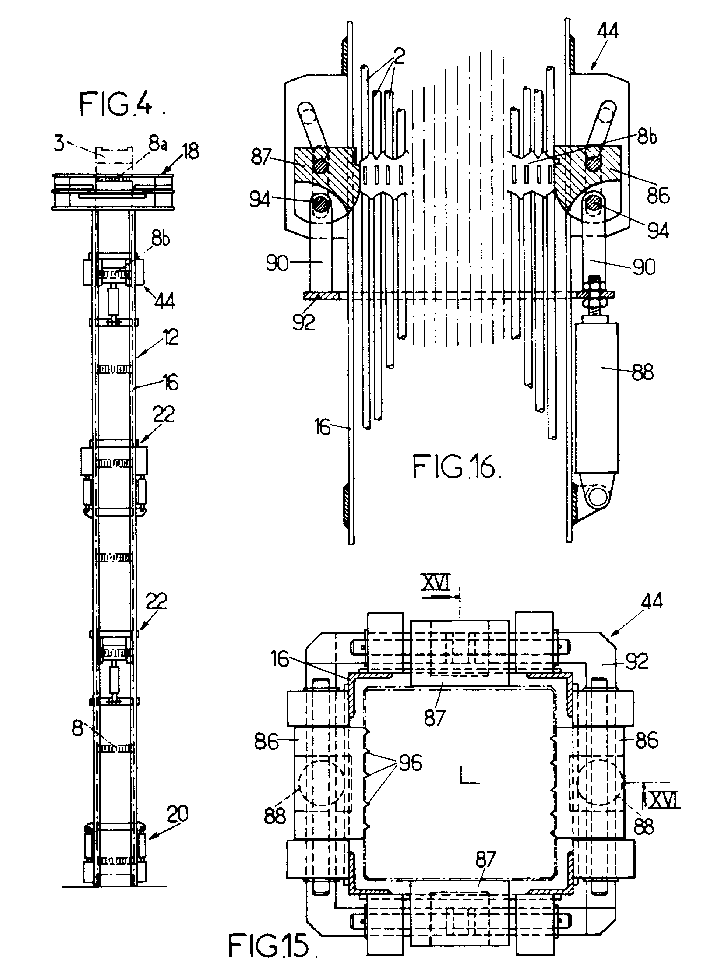

Un outil de découpe 24 est prévu pour découper les tubes-guides 6 reliant les embouts 3 et 4 au dessous du niveau de la grille supérieure 8a (figure 3) et pour retirer l'ensemble constitué de l'embout 3, des tronçons découpés des tubes-guides 6 et de la grille supérieure 8a.

Un outil de préhension 28, suspendu à un chariot 30 permet d'extraire les crayons et de les manipuler. L'outil 28 représenté comprend une ossature 32 de guidage vertical des crayons, munie de peignes 34, qui peut être du type décrit dans le document FR-A-2 460 027. La tête 36 est déplaçable verticalement dans l'ossature 32 par un vérin 38.

L'installation de la figure 2 comporte enfin un carquois 39 pour les crayons défectueux et une cellule de regroupement 40 ayant un carquois pyramidal 42 de regroupement des crayons en botte.

Dans la cellule de démantèlement suivant l'invention montrée schématiquement en figure 4, la structure 16 présente une section carrée et est constituée de profilés d'angle assemblés par des cadres. Sa hauteur est telle que l'embout supérieur 3 soit au dessus de la cellule lorsque l'assemblage est en place. La structure 16 porte, de bas en haut :

– le mécanisme 20 de fixation et de centrage de l'embout inférieur de l'assemblage 14 contenu dans la cellule ;

– des mécanismes 22 de maintien simple de deux grilles de l'assemblage ;

– un mécanisme 44 de maintien et de centrage de la grille 8b de l'assemblage qui est la plus haute, après enlèvement de l'ensemble comprenant l'embout supérieur ; et

– le mécanisme 18 à deux jeux de peignes, destiné à maintenir les extrémités supérieures des crayons à l'écartement nominal et porté par l'extrémité supérieure de la structure.

On décrira maintenant les divers mécanismes énumérés ci-dessus.

Mécanisme à peignes (figures 5 à 8)

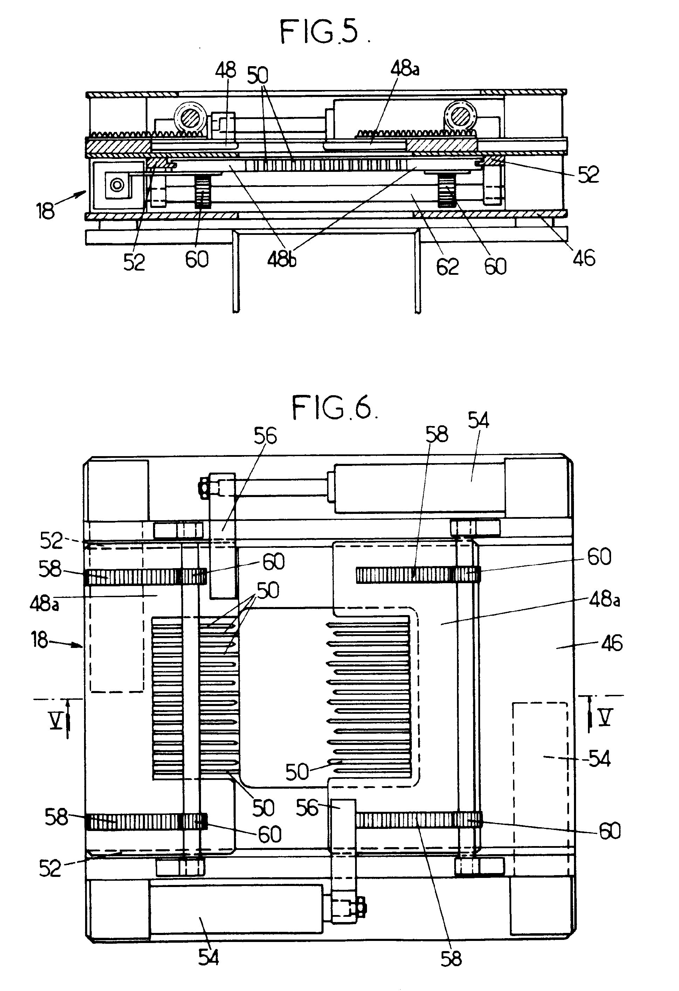

Les figures 5 et 6 montrent l'ensemble du mécanisme à peignes 18. Dans un but de clarté, un seul des peignes y est représenté en position insérée, alors qu'en réalité les peignes opposés se déplacent simultanément.

Le mécanisme 18 comprend un châssis 46 à deux étages affectés chacun à un jeu de deux peignes opposés. Le jeu supérieur est constitué de deux peignes 48a se déplaçant horizontalement dans le plan de la figure, entre une position où ils sont écartés l'un de l'autre et une position d'insertion maximum où les dents 50 des peignes sont pratiquement en contact. Dans le mode de réalisation montré en figure 6, les dents 50 de chaque peigne ont une longueur correspondant à la demi-largeur du faisceau de crayons. Chaque peigne 48a coulisse sur deux rampes de guidage 52 ménagées sur le châssis. Des moyens de déplacement simultané de deux peignes 48a comprennent deux vérins 54 à pression de fluide, dont le cylindre est porté par le châssis 46 et dont le piston est relié à l'un des deux peignes par une traverse 56. Pour assurer la régularité du déplacement des peignes 48a et éviter leur coincement, chaque peigne porte deux crémaillères latérales 58 qui engrènent des pignons correspondants 60 fixés sur un arbre commun 62 tournant dans des paliers fixés au châssis 46.

Le montage et la mise en action des peignes 48b du jeu inférieur est le même que ceux des peignes 48a, mais les déplacements des peignes d'un jeu s'effectuent orthogonalement à ceux des peignes de l'autre. Pour simplifier, les mêmes numéros de référence ont été utilisés sur la figure 5 pour désigner les éléments correspondants associés aux peignes 48a et 48b.

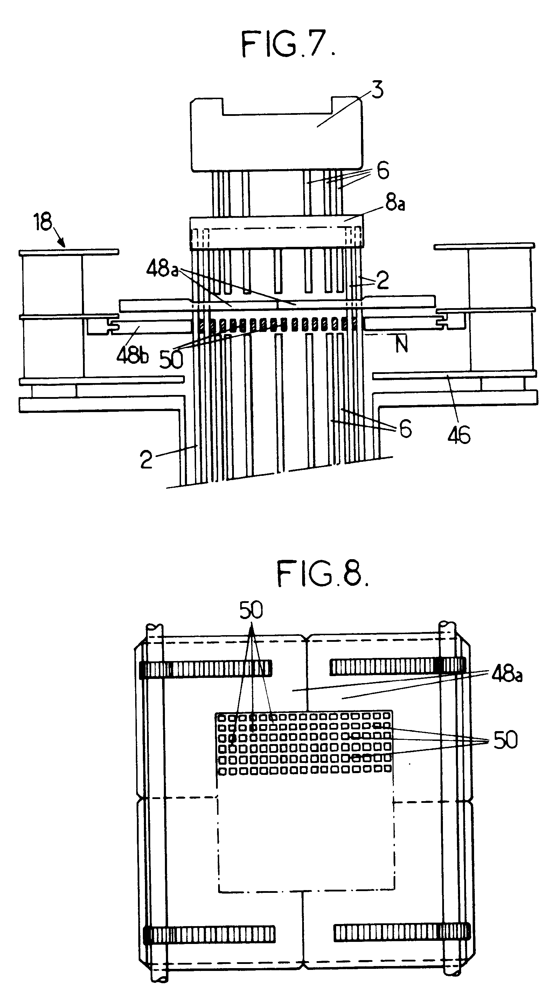

On voit sur la figure 7, où quelques crayons 2 seulement ont été montrés, que le cadre 46 est fixé sur une bride haute de la structure 16 à un niveau tel que les peignes 48a et 48b viennent s'insérer entre les crayons juste au dessus du niveau N où sont découpés les tubes-guides 6. Grâce à cette disposition, on réalise un quadrillage d'alvéoles, visible sur la figure 8, immédiatement au dessous de l'emplacement où les crayons seront saisis par les moyens destinés à les enlever.

### Mécanisme de fixation et de centrage d'embout inférieur

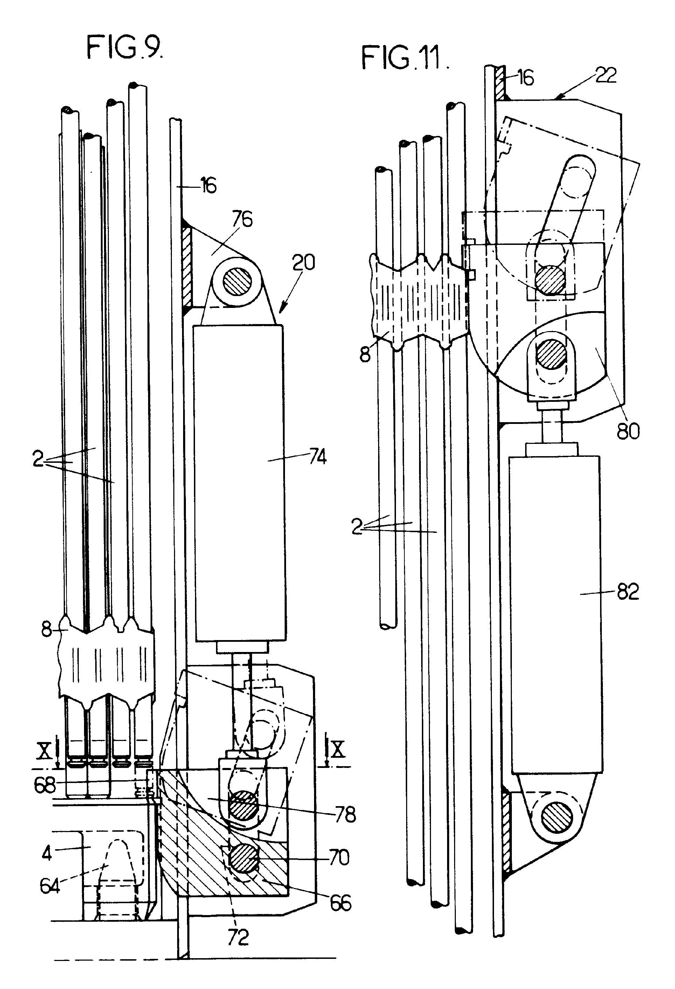

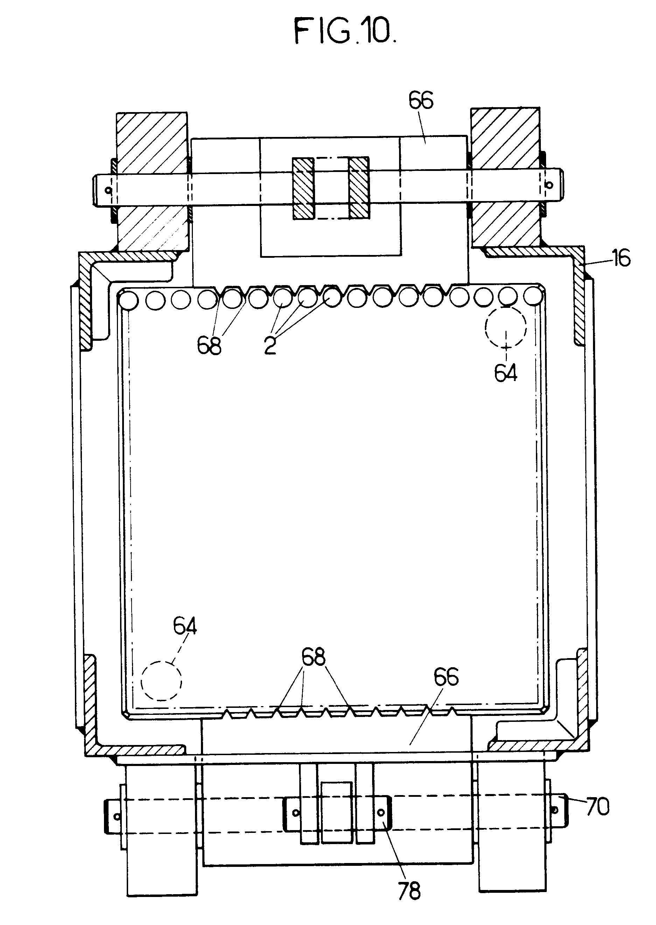

Le mécanisme 20 montré en figures 9 et 10 comprend deux pions de centrage 64 portés par le fond de la structure 16 et destinés à s'engager dans des évidements de forme correspondante de l'embout inférieur 4. Le mécanisme comprend également un seul jeu de mors 66 agissant sur deux faces opposées de l'embout 4 et disposés symétriquement par rapport à cet embout. Chaque mors 66 est déplaçable entre une position de serrage de l'embout 14 (en traits pleins sur la figure 9) et une position de libération de cet embout (en traits mixtes). Chaque mors présente une face d'appui lui permettant tout à la fois de maintenir solidement l'embout 4 et de le centrer. Dans le mode de réalisation montré en figures 9 et 10, la face d'appui de chaque mors 66 est munie d'ergots 68 qui passent entre les crayons combustibles adjacents 2, s'appuient contre la face supérieure de l'embout 4 et s'opposent à son soulèvement.

Les mors 66 sont guidés dans leur déplacement par des broches 70 fixées à la structure 16 et emprisonnées dans des trous allongés 72 des mors. Les déplacements des mors sont commandés par des vérins respectifs 74 (figure 9) dont le cylindre est articulé sur une patte 76 appartenant à la structure 16 et dont le piston est relié à un axe 78 traversant le mors 66.

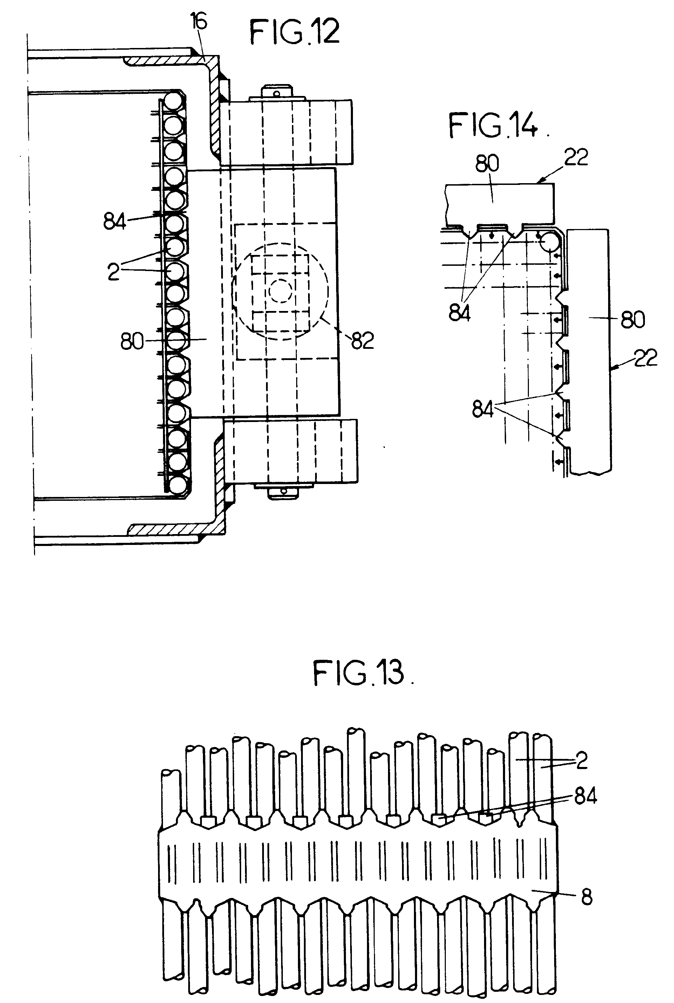

### Mécanismes de maintien de grille (figures 11 et 12)

L'alvéole montré en figure 4 comporte deux mécanismes 22 de maintien simple de deux grilles courantes 8 de l'assemblage, auxquels s'ajoute un mécanisme de maintien et de centrage de la grille haute 8b qui sera décrit plus loin.

Les deux mécanismes 22 de maintien simple agrippent chacun une grille sur deux faces seulement. Le mécanisme 22 situé le plus bas agrippe par exemple la troisième grille à partir du bas sur ses deux faces parallèles au plan de la figure 4 et l'autre mécanisme 22 agrippe la cinquième grille à partir du bas, sur les deux faces perpendiculaires au plan de la figure 4. Les deux mécanismes 22 sont identiques. Celui qui est représenté sur les figures 11 et 12 a une constitution très similaire à celle du mécanisme 20 : il comprend également deux mors 80 déplaçables chacun entre une position de serrage et une position de libération par un vérin 82. Chaque mors 80 présente une face plate d'appui sur la grille 8 et des ergots de section triangulaire 84 s'engageant dans les espaces libres entre les crayons combustibles 2 pour retenir axialement la grille. Les appuis des ergots 84 peuvent avoir la répartition montrée schématiquement sur la figure 13 pour l'un des mors 80, une disposition décalée de la distance entre deux crayons successifs pour l'autre grille. Ainsi chaque grille 8 est maintenue accrochée en 14 points.

Dans la cellule 12 de la figure 4, le mécanisme 22 inférieur agrippe la grille 8 par deux faces orthogonales aux faces saisies par le mécanisme 20 de fixation et de centrage de l'embout inférieur et orthogonales aux faces saisies par l'autre mécanisme 22. On obtient ainsi une répartition des ergots d'accrochage qui est celle montré schématiquement en figure 14 et garantit un maintien solide.

### Mécanisme de maintien et de centrage de la grille haute

Le mécanisme 44 de maintien et de centrage de la grille haute 8b (septième grille à partir du bas dans le cas de l'assemblage de la figure 1) est prévu pour saisir la grille sur ses quatre faces. Il peut avoir la constitution montrée en figures 15 et 16, ayant deux vérins 88 seulement, situés à l'opposé l'un de l'autre et destinés à déplacer deux jeux de mors 86 et 87 deux à deux opposés. Les moyens de guidage des mors ne seront pas décrits, car ils peuvent avoir exactement la même constitution que ceux déjà illustrés en figures 9 et 11. On obtient une commande simultanée des quatre mors en fixant les pistons des deux vérins 88 à une même plaque horizontale mobile 92 qui entoure la structure et qui porte des biellettes verticales 90 munies d'axes 94 d'articulation des mors. Dans le mode de réalisation illustré, les mors 86 d'un seul des deux jeux sont munis d'ergots de retenue 96.

L'action des mors 86 et 87 sur les quatre faces de la grille 8b redresse l'assemblage combustible en cas de déformation de l'assemblage ayant provoqué une flexion des crayons ou un vrillage.

Une cellule suivant l'invention peut être prévue pour des assemblages combustibles différents de celui montré en figure 1, par exemple des assemblages pour réacteur de 1300 MWe comportant un nombre de grilles accru. Les divers mécanismes décrits peuvent encore être utilisés. Tous ces mécanismes sont de constitution simple et garantissent cependant le maintien transversal et longitudinal de l'embout inférieur et des grilles et le maintien des crayons aux noeuds d'un réseau déterminé, évitant ainsi les risques de coincement lors de leur extraction. Des moyens similaires à ceux qui ont été décrits pourraient être utilisés pour démanteler un assemblage ayant une section hexagonale et non plus carrée et des crayons répartis aux noeuds d'un réseau triangulaire.

Le procédé de mise en oeuvre de la cellule découle de la description qui précède et ne nécessite donc pas d'être détaillé. L'assemblage combustible à démanteler est descendu dans la cellule, suspendu à un outil de manutention, les mors des différents mécanismes et les peignes étant écartés. L'embout inférieur 4 se centre sur les pions 64 à la fin de son mouvement de descente. Les vérins 74 du mécanisme 20 sont actionnés pour rapprocher les mors 66 et agripper l'embout 4 sur deux faces. Puis les mécanismes de maintien de grille 22 et 44 sont mis en oeuvre : ces mécanismes empêchent les grilles de se déformer pendant l'extraction des crayons combustibles en facilitant leur glissement. Les tubes-guides sont sectionnés au-dessous du niveau de la grille haute 8a et l'ensemble comprenant cette grille et l'embout supérieur 3 est enlevé. Enfin les peignes du mécanisme 18 sont rapprochés pour maintenir les extrémités hautes des crayons combustibles aux noeuds de leur réseau nominal de répartition.

## Revendications

1. Cellule de réception et de démantèlement pour assemblage combustible nucléaire comprenant un faisceau de crayons de combustible (2) retenus aux noeuds d'un réseau régulier par un squelette constitué de deux embouts (3,4) reliés par des tirants (6) et de grilles (8) réparties le long des tirants, comprenant une structure verticale de section droite correspondant à celle de l'assemblage à recevoir, portant des mécanismes (44,20) de retenue des grilles et de l'embout inférieur et un mécanisme (18) de maintien des crayons à leur écartement nominal à peignes (48a,48b) déplaçables entre une position où ils sont hors de l'assemblage et une position où les doigts (50) des peignes s'engagent entre les crayons, au dessus de la grille la plus haute restante après enlèvement de l'embout supérieur, caractérisée en ce que le mécanisme (18) à peignes comporte au moins deux jeux de peignes (48a,48b) portés par un châssis (46) solidaire de ladite structure, les peignes de chaque jeu étant guidés sur le châssis et munis de vérins (54) permettant de les rapprocher et de les écarter dans une direction transversale à la direction de rapprochement et d'écartement des peignes de l'autre jeu et en ce que l'un des mécanismes (44) de retenue des grilles comprend des mors (86,87) articulés sur la structure et reliés à des vérins (88) de commande simultanée permettant de déplacer les mors entre une position où ils libèrent la grille (8b) située immédiatement au dessous du mécanisme à peignes et une position prédéterminée par rapport à la structure où les mors enserrent ladite grille (8b) de tous les côtés.

2. Cellule selon la revendication 1 de réception et de démantèlement pour assemblage combustible nucléaire de section carrée, dont les crayons sont retenus aux noeuds d'un réseau carré, caractérisée en ce que le mécanisme (18) à peignes comporte deux jeux seulement de peignes (48a,48b) déplaçables orthogonalement les uns aux autres et en ce que ledit mécanisme de retenue des grilles comprend deux jeux de deux mors (86,87), l'un des jeux au moins ayant des ergots (96) d'accrochage de la grille s'opposant au déplacement vers le haut de cette dernière.

3. Cellule selon la revendication 1 ou 2, caractérisée en ce que les mors (86,87) du mécanisme (44) de retenue des grilles sont commandés par deux vérins opposés (88) par l'intermédiaire d'une même plaque (92) reliée aux vérins (88) et entourant la structure.

4. Cellule selon l'une quelconque des revendications précédentes, caractérisée en ce que les mécanismes de retenue des grilles comprennent au moins un mécanisme (22) supplémentaire de retenue d'une autre grille ayant un seul jeu de deux mors (80) articulés sur la structure et reliés à des vérins individuels (82) de commande simultanée permettant de déplacer les mors entre une position où ils libèrent un côté de la grille et une position où ils la libèrent, lesdits mors étant munis d'ergots (84) disposés de façon à retenir la grille en s'insérant entre crayons adjacents et en prenant appui sur la tranche supérieure de la grille.

5. Cellule selon l'une quelconque des revendications précédentes caractérisée en ce qu'elle comprend de plus un mécanisme (20) de fixation et de centrage de l'embout inférieur de l'assemblage ayant des pions de centrage (64) portés par le fond de la structure et un seul jeu de deux mors (66) agissant sur deux faces opposées de l'embout, déplaçables chacun par un vérin entre une position de serrage de l'embout et une position de libération de l'embout.

6. Cellule selon la revendication 5, caractérisée en ce que les mors du mécanisme (20) de fixation et de centrage de l'embout inférieur et les mors des mécanismes (22) successifs de maintien de grille agissent sur des faces alternées le long de l'assemblage.

7. Cellule selon l'une quelconque des revendications précédentes, caractérisée en ce que chacun des mors (66,80,86,87) est guidé dans ses déplacements par des broches (70) fixées à la structure (16) et emprisonnées dans les trous allongés (72) des mors et en ce que les déplacements des mors sont commandés par les vérins par l'intermédiaire de liaisons articulées.

8. Cellule selon l'une quelconque des revendications précédentes, caractérisée en ce que les peignes (48a,48b) sont portés chacun par une glissière ménagée sur le châssis (46) et munis de vérins propres (54) de déplacement et en ce que chaque peigne porte des crémaillères latérales (58) engrenant les pignons (60) portés par un arbre commun (62) de façon à provoquer un déplacement régulier du peigne.

9. Cellule selon l'une quelconque des revendications précédentes, caractérisée en ce que sa hauteur est proportionnée à celle de l'assemblage combustible à recevoir pour que l'embout supérieur (3) et la grille la plus haute (8a) de l'assemblage soient au dessus de la structure de façon à permettre la découpe des tubes-guides (6) au dessous de la grille haute (8a) et l'enlèvement d'un ensemble constitué par l'embout supérieur (3), la grille haute (8a) et les tronçons des tubes-guides (6) au dessus de la découpe.

**Patentansprüche**

1. Kernbrennelementaufnahme- und -zerlegungszelle mit einem Brennelementebündel (2), die an Knoten eines regelmäßigen Netzes durch ein Skelett gehalten werden, das aus zwei Endstücken (3, 4) gebildet ist, die durch Spannstangen (6) und Gitter (8), die entlang der Spannstangen verteilt sind, verbunden sind,
mit einer vertikalen Struktur von geradem Querschnitt, die jene der Aufnahmeanordnung entspricht, die Haltemechanismen (44, 20) der Gitter und des unteren Endstücks trägt und einen Haltemechanismus (18) der Brennelemente an ihrem nominalen bestand mit Kämmen (48a, 48b), die zwischen einer Position, wo sie außerhalb der Anordnung sind und einer Position, wo die Finger (50) der Kämme zwischen die Brennelemente greifen, oberhalb des höchsten Gitters bewegbar sind, das nach dem Wegnehmen des oberen Endstücks verbleibt,
dadurch gekennzeichnet, daß der Kämmechanismus (18) wenigstens zwei Sätze von Kämmen (48a, 48b) aufweist, die von einem mit der Struktur verbundenen Chassis (46) getragen werden, wobei die Kämme eines jeden Satzes auf dem Chassis geführt sind, und mit Stelltrieben (54) versehen sind, die erlauben, sie aufeinander zu und voneinander weg zu bewegen in einer Richtung quer zur Zuführ- und Wegführrichtung der Kämme des anderen Satzes, und daß einer der Rückhaltemechanismen (44) der Gitter Spannbacken (86, 87) aufweist, die an der Struktur angelenkt sind und verbunden sind mit Stelltrieben (88) der gleichzeitigen Betätigung, die erlauben, die Spannbacken zwischen einer Position, wo sie das Gitter (8b), das unmittelbar unterhalb des Kammechanismus angeordnet ist, freigeben und einer Stellung zu bewegen, die bezüglich der Struktur vorbestimmt ist, wo die Spannbacken das Gitter (8b) von allen Seiten einklemmen.

2. Aufnahme- und Zerlegungszelle nach Anspruch 1 für Kernbrennelementanordnung von rechteckförmigem Querschnitt, deren Brennelemente an Knoten eines rechteckigen Netzes gehalten sind, dadurch gekennzeichnet, daß der Kammechanismus (18) nur zwei Sätze von Kämmen (48a, 48b) aufweist, die senkrecht zueinander bewegbar sind und daß der Rückhaltemechanismus der Gitter zwei Sätze von zwei Spannbacken (86, 87) aufweist, wobei wenigstens einer der Sätze Hakenvorsprünge (96) des Gitters aufweist, die sich der Bewegung des letzteren nach oben widersetzen.

3. Zelle nach Anspruch 1 oder 2, dadurch gekennzeichnet, daß die Spannbacken (86, 87) des Rückhaltemechanismus (44) der Gitter durch zwei einander gegenüberliegende Stelltriebe (88) betätigt werden, mittels einer selben Platte (92), die mit den Stelltrieben (88) verbunden ist und die Struktur umgibt.

4. Zelle nach einem der vorhergehenden Ansprüche, dadurch gekennzeichnet, daß die Rückhaltemechanismen der Gitter wenigstens einen zusätzlichen Rückhaltemechanismus (22) eines weiteren Gitters aufweisen, das einen einzelnen Satz von zwei Spannbacken (80) aufweist, die an der Struktur angelenkt sind und mit den einzelnen Simultan-Betätigungsstelltrieben (82) verbunden sind, die erlauben, die Spannbacken zwischen einer Stellung, wo sie eine Seite des Gitters freimachen und einer Stellung zu bewegen, wo sie es freigeben, wobei die Spannbacken mit Vorsprüngen (84) versehen sind, die derart angeordnet sind, daß sie das Gitter zurückhalten unter Eindringen zwischen benachbarte Brennelemente und durch Anlage an den oberen beschnitt des Gitters.

5. Zelle nach einem der vorhergehenden Ansprüche, dadurch gekennzeichnet, daß sie weiterhin einen Mechanismus (20) zum Befestigen und Zentrieren des unteren Endstücks der Anordnung aufweist, der Zentrierungsmetallstücke (64) aufweist, die vom Boden der Struktur getragen werden, und wobei ein einziger Satz von zwei Spannbacken (66) auf zwei einander gegenüberliegende Seiten des Endstücks wirkt, die jeweils durch einen Stelltrieb zwischen einer Klemmstellung des Endstücks und einer Freigabestellung des Endstücks bewegbar sind.

6. Zelle nach Anspruch 5, dadurch gekennzeichnet, daß die Spannbacken des Befestigungs- und Zentrierungsmechanismus (20) des unteren Endstücks und die Spannbacken der aufeinanderfolgenden Gitterhaltemechanismen (22) auf abwechselnde Seiten entlang der Anordnung wirken.

7. Zelle nach einem der vorhergehenden Ansprüche, dadurch gekennzeichnet, daß ein jeder der Spannbacken (66, 80, 86, 87) in seinen Bewegungen durch Dorne (70) geführt ist, die an der Struktur (16) befestigt sind und in längliche Löcher (72) der Spannbacken eingesetzt sind, und daß die Bewegungen der Spannbacken durch die Stelltriebe mittels gelenkiger Verbindungen erzeugt werden.

8. Zelle nach einem der vorhergehenden Ansprüche, dadurch gekennzeichnet, daß die Kämme (48a, 48b) jeweils durch eine Gleitschiene getragen werden, die an dem Chassis (46) ausgebildet ist, und mit eigenen Bewegungsstelltrieben (54) zur Bewegung versehen ist, und daß jeder Kamm seitliche Zahnstangen (58) trägt, die in Ritzeln (60) eingreifen, die durch eine gemeinsame Welle (62) derart getragen werden, daß sie eine regelmäßige Bewegung des Kammes hervorrufen.

9. Zelle nach einem der vorhergehenden Ansprüche, dadurch gekennzeichnet, daß ihre Höhe im Verhältnis steht zu jener der aufzunehmenden Brennanordnung, damit das obere Ende (3) und das oberste Gitter (8a) der Anordnung oberhalb des Struktur derart sich befinden, daß der Schnitt der Führungsrohre (6) unterhalb des oberen Gitters (8a) und das Entfernen einer Anordnung ermöglicht wird, die gebildet wird durch das obere Endstück (3), das obere Gitter (8a) und die Stücke der Führungsrohre (6) oberhalb des Schnitts.

## Claims

1. Reception and dismantling cell for a nuclear fuel assembly comprising a bundle of fuel rods (2) retained at the nodes of a regular lattice by a skeleton formed of two end pieces (3, 4) connected together by tie rods (6) and grids (8) spaced apart along the tie rods,
comprising a vertical structure with a cross section corresponding to that of the assembly to be received, carrying mechanisms (44, 20) for retaining the grids and the lower end piece and a mechanism (18) for holding the rods at their set spacing with combs (48a, 48b) movable between a position in which they are outside the assembly and a position in which the fingers (50) of the combs are engaged between the rods, above the topmost grid remaining after removal of the upper end piece,
characterized in that the comb mechanism (18) comprises at least two sets of combs (48a, 48b) carried by a frame (46) solidly fixed to said structure, the combs of each set being guided over the frame and having jacks (54) for moving hem toward and away from each other in a direction transversal to the direction along which the combs of the other set move toward and away from each other and in that one of the grid retention mechanisms (44) comprises jaws (86, 87) mounted for pivoting on the structure and connected to simultaneous control jacks (88) for moving the jaws between a position in which they release the grid (8b) situated immediately below the comb mechanism and a position predetermined with respect to the structure in which the jaws grip the grid (8b) on all sides.

2. Cell according to claim 1 for receiving and dismantling a square section nuclear fuel assembly, whose rods are retained at the nodes of a square lattice, characterized in that the comb mechanism (18) comprises two sets of combs only (48a, 48b) movable orthogonally with respect to each other and in that the grid retention mechanism comprises two sets of two jaws (86, 87) one of the sets at least having (96) for engagement with the grid preventing the upward movement of the latter.

3. Cell according to claim 1 or 2, characterized in that the jaws (86, 87) of the grid retention mechanism (44) are controlled by two opposite jacks (88) via the same plate (92) connected to the jacks (88) and surrounding the structure.

4. Cell according to any one of the preceding claims, characterized in that the grid retention mechanisms comprise at least one additional mechanism (22) for retaining another grid having a single set of two jaws (80) mounted for pivoting on the structure and connected to individual simultaneous control jacks (82) for moving the jaws between a position in which they release one side of the grid and a position in which they release it, said jaws being provided with studs (84) disposed so as to retain the grid by being inserted between adjacent rods and bearing on the upper edge of the grid.

5. Cell according to any one of the preceding claims, characterized in that it further comprises a mechanism (20) for fixing and centering the lower end piece of the assembly having centering studs (64) carried by the bottom of the structure and a single set of two jaws (66) acting on two opposite faces of the end piece, each movable by a jack between a position in which it clamps the end piece and a position in which it releases the end piece.

6. Cell according to claim 5, characterized in that the jaws of the mechanism (20) for fixing and centering the lower end piece and the jaws of the successive grid holding mechanisms (22) act on alternate faces along the assembly.

7. Cell according to any one of the preceding claims, characterized in that each of the jaws (66, 80, 86, 87) is guided in its movements by pins (70) fixed to the structure (16) and imprisoned in elongate holes (72) in the jaws and in that the movements of the jaws are controlled by jacks via hinges connections.

8. Cell according to any one of the preceding claims, characterized in that the combs (48a, 48b) are each carried by a slide formed on the frame (46) and have their own moving jacks (54) and in that each comb carries lateral racks (58) meshing with the pinions (60) carried by a common shaft (62) so as to cause smooth and even movement of the comb.

9. Cell according to any one of the preceding claims, characterized in that its height is proportioned to that of the fuel assembly to be received so that the upper end piece (3) and the top most grid (8a) of the assembly are above the structure so that the guide tubes (6) can be cut below the top most grid (8a) and an assembly to be removed formed by the upper end piece (3), the topmost grid (8a) and the sections of the guide tubes (6) above the cut.

# FIG.1.

**3** —

**6** —

**8a** —

**2** —

**8** —

**8** —

**8** —

**4** —

**3** —

**14** —

**6** —

**8a** —

**8b** —

**2**

## FIG.3.

## FIG.2.

FIG.4 .

FIG.16.

FIG.15 .

# FIG.5.

# FIG.6.

# FIG.7.

# FIG.8.

# FIG.9.

# FIG.11.

# FIG.10.

# FIG.12

# FIG.14.

# FIG.13.